(19) Europäisches Patentamt
European Patent Office
Office européen des brevets

(11) Numéro de publication : **0 337 835 B1**

# (12) FASCICULE DE BREVET EUROPEEN

(45) Date de publication du fascicule du brevet : **09.06.93 Bulletin 93/23**

(51) Int. Cl.[5] : **C01B 33/20**

(21) Numéro de dépôt : **89400831.7**

(22) Date de dépôt : **24.03.89**

## (54) Zéolites à base de silice et d'oxyde de germanium et procédé de synthèse de celles-ci.

(30) Priorité : **01.04.88 FR 8804367**

(43) Date de publication de la demande : **18.10.89 Bulletin 89/42**

(45) Mention de la délivrance du brevet : **09.06.93 Bulletin 93/23**

(84) Etats contractants désignés : **AT BE CH DE ES FR GB GR IT LI LU NL SE**

(56) Documents cités :
**EP-A- 0 034 727**
**EP-A- 0 054 386**
**GB-A- 2 066 230**
**US-A- 3 702 886**

(73) Titulaire : **RHONE-POULENC CHIMIE**
**25, quai Paul Doumer**
**F-92408 Courbevoie Cédex (FR)**

(72) Inventeur : **Guth, Jean-Louis**
**59, Rue Bellevue Brunstatt**
**F-68200 - Mulhouse (FR)**
Inventeur : **Gabelica, Zelimir**
**9, Rue des Peupliers**
**B-4370 Waremme-Oleye (BE)**

(74) Mandataire : **Dutruc-Rosset, Marie-Claude et al**
**RHONE-POULENC CHIMIE Direction des Brevets 25, Quai Paul Doumer**
**F-92408 Courbevoie Cédex (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des zéolites à base de silice et d'oxyde de germanium.

Elle concerne plus particulièrement des zéolites de structure MFI, et un procédé de synthèse de celles-ci.

Les zéolites sont des tectosilicates cristallisés. Les structures sont constituées par des assemblages de tétraèdres $TO_4$ formant une charpente tridimensionnelle par la mise en commun des oxygènes. Dans les zéolites du type aluminosilicate qui sont les plus communes, T représente le silicium tétravalent ainsi que l'aluminium trivalent. Les cavités et canaux de dimensions moléculaires de cette charpente accueillent les cations compensant le déficit de charge lié à la présence de l'aluminium trivalent dans les tétraèdres. Des éléments trivalents comme le gallium et plus rarement le bore ou le béryllium peuvent se substituer a l'aluminium.

D'une manière générale, la composition des zéolites peut être représentée par la formule brute $M_{2/n}O$ ; $Y_2O_3$ $xZO_2$ à l'état déshydraté et calciné. Z et Y représentent respectivement les éléments tétravalent et trivalent des tétraèdres $TO_4$ ; M représente un élément électropositif de valence n tel qu'un alcalin ou alcalino-terreux, constituant les cations de compensation ; x peut varier de 2 à théoriquement l'infini auquel cas la zéolite est une silice.

Chaque type de zéolite possède une structure poreuse distincte. La variation des dimensions et formes des pores d'un type à l'autre, entraîne des changements des propriétés adsorbantes. Seules les molécules ayant certaines dimensions et formes sont capables d'entrer dans les pores d'une zéolite particulière. En raison de ces caractéristiques remarquables les zéolites conviennent tout particulièrement pour la purification ou la séparation de mélanges gazeux ou liquides comme par exemple la séparation d'hydrocarbures par adsorption sélective.

La composition chimique avec en particulier la nature des éléments présents dans les tétraèdres $TO_4$ et la nature des cations de compensation échangeable, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolites existent dans la nature : ce sont des aluminosilicates dont les disponibilités et propriétés ne répondent pas toujours aux exigences des applications industrielles. De ce fait, la recherche de produits ayant des propriétés nouvelles a conduit à la synthèse d'une grande variété de zéolites essentiellement du type aluminosilicate. Parmi les nombreux exemples de ce type on peut signaler : la zéolite A (Brevet US N° 2882243), la zéolite X (Brevet US N° 2882244), la zéolite Y (Brevet US N° 3130007), la zéolite L (Brevet français N° 1224154), la zéolite T (Brevet français N° 1223775), la zéolite ZSM5 (Brevet US N° 3702886), la zéolite ZSM12 (Brevet US N° 3832449), la zéolite ZSM48 (Brevet européen N° 0015132).

Il a également été proposé des zéolites synthétiques contenant du germanium dans les tétraèdres $TO_4$. Le germanium tétravalent peut se substituer partiellement ou totalement au silicium tétravalent.

Un élément trivalent tel que l'aluminium ou le gallium est alors toujours présent dans les tétraèdres à côté des éléments tétravalents. Ainsi, les associations suivantes, avec le germanium dans les tétraèdres $TO_4$ de la charpente, sont connues : ($Si^{IV}$, $Ge^{IV}$, $Al^{III}$), ($Si^{IV}$, $Ge^{IV}$, $Ga^{III}$), ($Ge^{IV}$, $Al^{III}$) et ($Ge^{IV}$, $Ga^{III}$). On peut citer à titre d'exemple la publication de R.M. Barrer J.W. Baynham F.W. Bulkitude et W.M. Meier dans J. Chem. Soc. 1959 et les brevets concernant la faujasite (Br. Belge 793818), la NU-27 (Eur. Pat. Appl. 131 390), l'EU-7 (Eur. Pat. Appl. 107 908), l'EU-13 (Eur. Pat. Appl. 108 486), la NU-10 (Eur. Pat. Appl. 77 624), la NU-5 (Eur. Pat. Appl. 54 386), la NU-6 (Eur. Pat. Appl. 54 364), la NU-2 (Eur. Pat. Appl. 55 046), la FU-9 (Eur. Pat. Appl. 55 529), la NU-13 (Eur. Pat. Appl. 59 059), la NU-3 (Eur. Pat. Appl. 40 016), la SSZ-15 (US Pat. 4 610 854), la ZSM-5 (US Pat. 3 702 886), la ZSM-5 (Eur. Pat. 34 727), la ZSM-5 (Br. Fr 2 472 538).

On ne connaissait pas jusqu'à présent de zéolites où le silicium est substitué par du germanium en absence d'éléments trivalents, c'est-à-dire dont les tétraèdres $TO_4$ contiennent seulement le couple (Si, Ge).

Les zéolites sont généralement obtenues à partir d'un mélange réactionnel qui se transforme, en milieu hydrothermal, par un procédé de dissolution-recristallisation, le précipité cristallin étant, après séparation et séchage, calciné pour donner une zéolite active.

Le mélange réactionnel contient des réactifs pouvant fournir les éléments T à incorporer dans la charpente de la zéolite, ces réactifs sont généralement des gels aqueux contenant des oxydes ou hydroxydes des éléments T.

Il contient également un ou plusieurs mobilisateur favorisant la dissolution de ces réactifs et le transfert depuis la phase aqueuse sur les cristaux de zéolites en formation, et un agent structurant permettant, par son incorporation, la formation d'espaces microporeux ainsi qu'une stabilisation de la zéolite.

Lorsqu'on utilise comme mobilisateur les anions $OH^-$, les milieux réactionnels sont alors caractérisés par un pH basique généralement supérieur à 10. Ces milieux conviennent bien pour la dissolution des sources contenant les éléments silicium et aluminium, et d'une façon générale tous les éléments donnant des anions

oxygénés solubles en milieu basique.

Lorsqu'on utilise des bases fortes tels les hydroxydes de métaux alcalins, on obtient des milieux très sursaturés permettant une cristallisation rapide des zéolites. Mais il est souvent difficile de contrôler la formation de la phase cristallisée souhaitée qui est, dans beaucoup de cas, métastable. D'autre part, une vitesse de cristallisation élevée peut conduire à la formation de défauts dans la charpente de tétraèdres $TO_4$, tels que - $T\text{-}O^-$ a la place des pontages - T-O-T -. Enfin, la présence de cations de compensation alcalins dans les canaux et cavités est souvent gênante dans certaines applications et il peut alors être nécessaire de procéder à un échange avec d'autres cations. On peut éviter ce dernier inconvénient en remplaçant ces bases par d'autres bases fortes tels les hydroxydes d'alkylammonium qui peuvent jouer en même temps un rôle de structurant. Mais le prix élevé de ces produits limite leur utilisation industrielle. La mise en oeuvre de bases plus faibles telles que les amines qui ont également des propriétés structurantes, élimine en grande partie les inconvénients cités. Mais dans ce cas, la concentration en anions $OH^-$ mobilisateur peut devenir trop faible ce qui conduit à des vitesses de réaction trop faibles.

On peut aussi utiliser les anions fluorures $F^-$ comme agent mobilisateur des éléments donnant des complexes fluorés solubles.

Le domaine de pH utilisable dans le milieu réactionnel est alors élargi vers les pH neutres et même acides. La gamme des cations pouvant être engagés dans le milieu réactionnel est aussi plus vaste puisqu'elle peut inclure des cations tels que $NH_4^+$ facilement éliminables après synthèse par une calcination.

L'invention a pour objet des zéolites à base de silice et d'oxyde de germanium ayant après calcination la formule suivante :

$$(Si_{96-x}\,Ge_x)\,O_{192}$$

dans laquelle x est compris entre 0,1 et 36 environ.

Selon une nouvelle caractéristique de l'invention, les zéolites appartiennent à la famille des pentasils et s'apparentent aux zéolites du type structural MFI. Elles sont appelées germanozéosilites.

La zéolite de l'invention a un système cristallin monoclinique et un diagramme de diffraction des rayons X défini dans le tableau I.

Dans ce tableau, les valeurs extrêmes des différentes équidistances réticulaires $d_{hkl}$ sont données et correspondent aux concentrations limites de Germanium incorporé dans la charpente de la zéolite, ou plus précisément au rapport Ge/(Si + Ge).

En effet, l'identification des zéolites à structure MFI peut être notamment et avantageusement réalisée par l'établissement de leur diagramme de diffraction des rayons X.

Ce diagramme de diffraction peut être obtenu à l'aide d'un diffractomètre en utilisant la méthode classique des poudres avec le rayonnement K du cuivre. A partir de la position des pics de diffraction représentée par l'angle 2θ on calcule, par la relation de Bragg, les équidistances réticulaires $d_{hkl}$ caractéristiques de l'échantillon. L'estimation de l'erreur de mesure $\Delta$ ($d_{hkl}$) sur $d_{hkl}$ se calcule, en fonction de l'erreur absolue $\Delta$ (2θ) affectée à la mesure de 2θ , par la relation de Bragg. Une erreur absolue $\Delta$ (2 θ ) égale à ± 0,2° est couramment admise. L'intensité relative I/Io affectée à chaque valeur de $d_{hkl}$ est estimée à partir de la hauteur du pic de diffraction correspondant. On utilise souvent une échelle de symboles pour caractériser cette intensité FF = très fort, F = fort, mF = moyen à fort, m = moyen, mf = moyen à faible, f = faible, ff = très faible.

La valeur du volume $V_o$ de la maille cristallographique des zéolites selon l'invention est fonction de la substitution du silicium par le germanium.

Selon une autre caractéristique de l'invention, les zéolites peuvent contenir du fluor lorsque les anions $F^-$ ont été utilisés comme mobilisateur. La concentration en fluor est généralement comprise entre 0,01 et 1,4 % en poids après calcination. Ce fluor peut toutefois être éliminé par un traitement hydrothermal à pH > 7 sans pour cela modifier la structure de la zéolite de l'invention.

Tableau I

Diagramme de diffraction des rayons X

| Valeurs extrêmes des $d_{hkl}$ (nm) | $I/I_o$ | Valeurs extrêmes des $d_{hkl}$ (nm) | $I/I_o$ |
|---|---|---|---|
| 1,120 - 1,123 | F-FF | 0,460 - 0,464 | f |
| 0,992 - 1,004 | F-FF | 0,444 - 0,449 | f |
| 0,973 - 0,984 | f | 0,434 - 0,439 | f |
| 0,896 - 0,904 | ff | 0,422 - 0,427 | f |
| 0,803 - 0,811 | ff | 0,406 - 0,411 | ff |
| 0,742 - 0,750 | ff (large) | 0,400 - 0,403 | f |
| 0,705 - 0,712 | ff | 0,3835- 0,3875 | F |
| 0,667 - 0,676 | f | 0,3805- 0,3845 | mF |
| 0,633 - 0,640 | f | 0,3780- 0,3820 | mF |
| 0,595 - 0,602 | mf | 0,3740- 0,3780 | m |
| 0,590 - 0,596 | f | 0,3715- 0,3755 | m |
| 0,570 - 0,576 | mf | 0,3710- 0,3750 | m |
| 0,566 - 0,572 | f (+épaulement) | 0,3650- 0,3690 | f |
| 0,555 - 0,561 | f | 0,3615- 0,3650 | f |
| 0,535 - 0,541 | f | 0,3480- 0,3515 | ff (large) |
| 0,532 - 0,538 | f | 0,3435- 0,3470 | f |
| 0,511 - 0,516 | ff (large) | 0,3415- 0,3450 | f |
| 0,502 - 0,506 | ff | 0,3385- 0,3422 | ff |
| 0,496 - 0,501 | mf | 0,3342- 0,3377 | f (large) |
| 0,486 - 0,491 | ff (large) | 0,3295- 0,3329 | f |
| 0,469 - 0,474 | ff | 0,3245- 0,3279 | f |

L'invention a également pour objet un procédé de synthèse des zéolites conformes à l'invention ; ce procédé comporte :

(i) la préparation d'un mélange réactionnel en milieux aqueux contenant une source de silicium au degré d'oxydation + 4, une source de germanium au degré d'oxydation + 4, un agent structurant,

(ii) la cristallisation de ce mélange réactionnel par chauffage et la récupération du précipité cristallisé,

(iii) la calcination de celui-ci à une température supérieure a 450°C pour l'élimination du structurant occlu dans les canaux.

L'agent mobilisateur est, pour un pH supérieur à environ 12, les ions $OH^-$. Pour un pH inférieur ou égal à environ 12, des ions $F^-$ sont ajoutés comme agent mobilisateur.

D'une façon générale, il est conseillé d'éviter la présence, dans le milieu réactionnel, de cations alcalins ou ammonium ($NH_4^+$) qui forment des composés insolubles de germanium tels que, par exemple, $KH_3Ge_2O_6$, $NH_4H_3Ge_2O_6$, $Na_2Ge_3O_77H_2O$, $K_3HGe_7O_{16}xH_2O$, $K_4Ge_9O_{20}$ et qui bloquent le germanium, empêchant ou limitant son incorporation dans la charpente de la zéolite.

De nombreuses sources de l'élément silicium au degré d'oxydation +4 peuvent être utilisées. On peut citer à titre d'exemple, les silices sous forme d'hydrogels, d'aérogels, de xérogel, de suspensions colloïdales, les

silices résultant de la précipitation à partir de solutions de silicates solubles ou de l'hydrolyse d'esters siliciques comme $Si(OC_2H_5)_4$, les silices préparées par des traitements d'extraction et d'activation de composés cristallisés ou amorphes naturels ou synthétiques comme les silicates d'aluminium, les aluminosilicates, les argiles. On peut également utiliser des composés du silicium tétravalent hydrolysables tels les halogénures de silicium ou analogues.

Parmi les sources de germanium au degré d'oxydation +4 on peut citer, à titre d'exemple, l'oxyde $GeO_2$ du type quartz, les composés du germanium pouvant être hydrolysés tels les alkoxydes, les halogénures ou analogues.

Il est également possible d'utiliser des composés contenant les éléments silicium et germanium associés tels que par exemple des verres ou des gels mixtes.

Les sources des éléments silicium et germanium au degré d'oxydation +4 peuvent être engagées sous forme de solutions ou de solides pulvérulents, mais également sous forme d'agglomérats, tels que, par exemple, pastilles ou extrudés, pouvant être transformés en zéolite sans modification de la forme.

L'agent mobilisateur $OH^-$ est introduit sous forme de base(s) faible(s) et/ou forte(s) ne contenant de préférence pas de cations alcalins ou $NH_4^+$. On peut citer les amines et les hydroxydes d'ammonium quaternaire.

L'agent mobilisateur $F^-$ est introduit sous forme d'acide et/ou de sel(s), ne contenant pas de cations alcalins ou $NH_4^+$, et/ou de composés libérant $F^-$ par hydrolyse. On peut citer, à titre d'exemple, l'acide fluorhydrique, les fluorhydrates d'amines, les fluorures d'ammonium quaternaire, $SiF_4$, $GeF_4$.

Les agents structurants convenables pour l'invention sont :

- les amines de formule I :

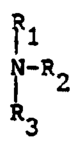

(I)

dans laquelle :

$R_1$, $R_2$, $R_3$ identiques ou différents représentent un groupe alkyle, de préférence un groupe propyle ou butyle.

- les alkyles d'ammonium quaternaire de formule II

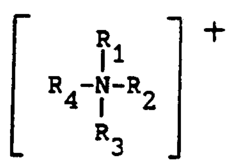

(II)

dans laquelle :

$R_1$, $R_2$, $R_3$, $R_4$ identiques ou différents représentent des groupes alkyles, de préférence des groupes propyles ou butyles.

- les composés de formules I et II dans lesquelles l'azote a été remplacé par un atome de phosphore.

Selon une caractéristique préférée de l'invention, les agents structurants sont les composés qui peuvent fournir des cations tétrapropylammonium ou tripropylammonium.

Le structurant pourra être introduit sous forme de base ou de sel selon la nature du ou des mobilisateur(s) choisi(s) qui va déterminer le domaine de pH du milieu réactionnel.

Ainsi, en absence d'anion $F^-$, le pH élevé nécessaire à la synthèse pourra être obtenu par l'introduction du structurant sous forme d'hydroxyde d'ammonium quaternaire de formule II. Par contre, en présence d'anions $F^-$, le structurant pourra être introduit sous forme de sel d'ammonium quaternaire de formule II ou de l'amine de formule I, le pH étant éventuellement ajusté à l'aide d'une base. Avantageusement, cette base aura des propriétés d'agent structurant faible pour ne pas concurrencer l'agent structurant ajouté. Ainsi, les bases convenables pour l'invention sont à titre d'exemple, la méthylamine, la diméthylamine, la triméthylamine, l'éthylamine, la diéthylamine et la triéthylamine.

Le mélange réactionnel a la composition suivante, exprimée en rapport molaire :

Ge/(Si+Ge) compris entre 0,001 et 0,80, de préférence, quand le pH est supérieur à 12 entre 0,002 et 0,8 avantageusement entre 0,01 et 0,7, et quand le pH est inférieur ou égal à 12 entre 0,001 et 0,75 avantageusement entre 0,002 et 0,60.

Agent structurant/(Si+Ge) compris entre 0,002 et 4, de préférence entre 0,06 et 2 pour un pH supérieur à 12 et entre 0,06 et 1 pour un pH inférieur ou égal à 12.

F/(Si+Ge) compris entre 0,04 et 4, de préférence entre 0,06 et 2 pour un pH inférieur ou égal à 12.

$H_2O$/(Si+Ge) compris entre 4 et 400, de préférence 10 et 200 pour un pH supérieur à 12, et entre 20 et 200 pour un pH inférieur ou égal à 12.

Quand une base est utilisée pour ajuster le pH, le rapport molaire de la base par rapport à (Ge+Si) est compris entre 0 et 12, de préférence entre 2 et 8.

L'ajout à ce mélange réactionnel, de germes cristallisés de structure déterminée, par exemple MFI, dans une proportion qui n'excède pas quelques pourcents pondéraux par rapport au poids de $SiO_2$ + $GeO_2$ engagé peut faciliter la cristallisation de la zéolite.

La cristallisation de la zéolite peut être obtenue par chauffage du mélange réactionnel à une température comprise entre 40°C environ et 240°C environ, de préférence entre 60°C et 220°C pendant le temps nécessaire à la cristallisation, selon un mode opératoire classique de synthèse de zéolite et connu de l'homme du métier. A titre indicatif, la durée de chauffage peut être comprise entre 6 heures et 500 heures environ.

Ce chauffage et cette cristallisation sont réalisés de préférence dans un récipient ou autoclave revêtu d'une couche telle que, par exemple, le polytétrafluoroéthane.

Le mélange réactionnel peut être agité ou non.

Après cristallisation, le précipité obtenu est recueilli, par exemple, par filtration.

Ce précipité est ensuite chauffé après un séchage éventuel, à une température supérieure à 450°C, de préférence supérieure à 500°C, afin de décomposer par calcination ou décomposition thermique les espèces organiques contenues dans le précipité, telles que, par exemple, l'agent structurant.

Les zéolites de l'invention ont des propriétés d'adsorption sélective.

Elles peuvent également être utilisées dans la catalyse de nombreuses réactions telles que, par exemple, les réactions de disproportionnement ou d'alkylation, l'hydrogénolyse et l'hydrogénation de coupes pétrolières ou dans les procédés de reforming.

Ainsi, le brevet allemand 2631391 décrit la réaction d'hydrogénolyse du tétracyclododécane en alkyladamantane en présence d'un tamis moléculaire contenant notamment du germanium, le brevet US 4394300 décrit des réactions de disproportionnement et d'alkylation utilisant des zéolites de type MFI dans lesquelles ont été introduits des atomes de germanium.

Les brevets Ep 172091, De 3522573, Fr 2545380 et US 4457832 donnent des exemples d'utilisation de catalyseurs contenant du germanium pour les réactions d'hydrogénolyse, hydrogénation des coupes pétrolières ou pour les procédés de reforming.

L'invention a également pour objet un produit cristallin du type zéolite à base de silice et d'oxyde de germanium susceptible d'être obtenu par le procédé comprenant :

(i) la préparation d'un mélange réactionnel en milieu aqueux contenant au moins une source de silicium au degré d'oxydation + 4, une source de germanium au degré d'oxydation + 4, des ions fluorures quand le pH est inférieur ou égal à 12, un agent structurant.

(ii) la cristallisation du mélange réactionnel et la récupération du précipité cristallin.

Les rapports molaires des différentes espèces dans le milieu réactionnel sont ceux indiqués précédemment.

Le précipité cristallin est avantageusement lavé pour éliminer les impuretés et notamment les cations ou anions non accrochés ou incorporés dans la structure.

Ce produit manipulable est notamment et principalement utilisé pour la production de zéolite par calcination sous des conditions appropriées et déterminées en fonction de l'utilisation désirée de la zéolite.

D'autres buts, caractéristiques et détails de l'invention apparaîtront plus clairement au vu des exemples suivants donnés uniquement à titre indicatif et illustratif.

## Exemple 1

Cet exemple décrit la synthèse d'une germanozéosilite dans un milieu réactionnel à un pH supérieur à 12.

On dilue 14 g de solution aqueuse à 40 % d'hydroxyde de tétrapropylammonium (TPA-OH) avec 22,5 g d'eau et on ajoute à cette solution 3,06 g de silice Aerosil 130 de la Société Degussa et 2 g de $GeO_2$ type quartz.

On laisse le mélange s'équilibrer à 60°C, durant 2 heures.

La composition ramenée à 1 mole de ($SiO_2$ + $GeO_2$) est alors la suivante :

0,4 TPA-OH ; 0,27 $GeO_2$ ; 0,73 $SiO_2$ ; 25 $H_2O$

Ce mélange est chauffé à 160°C pendant 3 jours dans un autoclave.

Après refroidissement, filtration, lavage et séchage à 80°C, on obtient 3,1 g de germanozéosilite formée de cristaux dont la taille est proche du micromètre. Après calcination sous air à 550°C, durant une nuit, le produit

est caractérisé par un diagramme de diffraction des rayons X conforme à celui du tableau I. Par analyse chimique, on détermine la formule suivante :

$$(Si_{90,95}\ Ge_{5,05})O_{192}$$

Exemple 2

Cet exemple décrit une synthèse d'une zéolite en milieu acide, avec utilisation des ions $F^-$ comme agent mobilisateur.

On mélange 17 g de $SiCl_4$ et 2,15 g de $GeCl_4$ dans 20 ml de propanol puis on ajoute 60 g d'eau. On obtient un gel qui est séché à 80°C, jusqu'a obtention d'un poids de produit égal à 10,4 g. On disperse ce gel dans une solution aqueuse contenant 6,65 g de bromure de tétrapropylammonium (TPA-Br), 7,15 g de tripropylamine (Tri-PA), 4 g de solution aqueuse de HF à 50 % et la quantité d'eau nécessaire pour arriver à la composition suivante (ramenée à 1 mole de $SiO_2$) : 0,25 TPA-Br ; 0,5 Tri-PA ; 1 HF ; 1 $SiO_2$ ; 0,1 $GeO_2$ ; $30H_2O$.

On disperse dans ce mélange 0,12 g de cristaux broyés ayant une structure type MFI, comme germe de cristallisation. Le mélange réactionnel, caractérisé par un pH compris entre 2 et 3, est chauffé 15 jours à 96°C. Après séparation des eaux mères et lavage à l'eau, on obtient 4,8 g de cristaux, contenant quelques particules amorphes, qui sont calcinées 6 heures sous air à 550°C.

Le diagramme de diffraction des rayons X obtenu sur le produit calciné est conforme aux valeurs du tableau I. La germanozéosilite obtenue a pour formule :

$$(Si_{91,3}\ Ge_{4,7})O_{192}$$

et elle contient en outre 0,6 (pondérale) de Fluor.

Exemple 3

On mélange $SiCl_4$ et $GeCl_4$ dans 20 g de propanol puis on ajoute gouttes à gouttes 60 g d'eau sous agitation. Après 3 heures, le gel obtenu est séché à 85°C puis redispersé dans une solution aqueuse contenant HF, la tripropylamine (Tri-PA), le bromure de tétrapropylammonium (TPA-Br). Les conditions de cet essai sont rassemblées dans le tableau II.

Exemples 4 et 5

On prépare une solution A contenant $GeCl_4$ et une solution aqueuse à 5 % HF.

On prépare de même une solution B aqueuse contenant la méthylamine et le bromure de tétrapropylammonium (TPA-Br). Les solutions A et B sont mélangées en versant A dans B sous agitation.

Dans le gel obtenu, après 30 minutes d'agitation, on disperse de la silice aérosil 130 et des germes de cristallisation.

Les quantités engagées, la composition molaire des deux essais 4 et 5, les conditions de cristallisation ainsi que les résultats obtenus figurent dans le tableau III.

Exemple 6

Un essai a été réalisé selon les mêmes conditions que l'exemple 4 (cf. tableau III). Toutefois, la solution d'acide fluorhydrique est remplacée par de l'eau. Dans ces conditions, le produit final obtenu est amorphe. Cet essai montre clairement l'importance du mobilisateur $F^-$ pour un pH inférieur à 12.

Tableau II

| | Essai 3 |
|---|---|
| $SiCl_4$ | 6,37 g |
| $GeCl_4$ | 2,68 g |
| masse du gel sèché à 85 % | 3 g |
| $H_2O$ | 27 g |
| HF à 50 % | 0,86 ml |
| Tri-PA | 3,58 g |
| TPA-Br | 3,33 g |
| masse de germe | 0,06 g |
| composition du mélange réactionnel ramenée à à 1(Si+Ge) | 0,25 TPA-Br ; 0,5 Tri-PA ; 0,5 HF ; 0,75 $SiCl_4$ ; 0,25 $GeCl_4$ ; 30 $H_2O$ ; |
| pH | 6 - 7 |
| température de chauffage | 95°C |
| durée du chauffage | 12 jours |
| masse de cristaux obtenus | 2,6 g |
| nature des phases | germanozéosilite pure (% Ge = 10,93) pondéral |

Tableau III

| | Essai 4 | Essai 5 |
|---|---|---|
| | Solution A | Solution A |
| HF à 50 % dans l'eau | 0,4 g | 0,4 g |
| $GeCl_4$ | 1,07 g | 2,14 g |
| | Solution B | Solution B |
| $H_2O$ | 7 g | 5 g |
| $CH_3$ $NH_2$ à 40 % dans l'eau | 3,10 g | 6,2 g |
| TPA-Br | 1,33 g | 1,33 g |
| | Compléments ajoutés au gel | |
| $SiO_2$ Aerosil 130 | 0,9 g | 0,6 g |
| Germes | 0,015 g | 0,015 g |
| Composition molaire (ramenée à 1 (Ge+Si) | 0,25 TPA-Br ; 0,5 HF ; 2 $CH_3$ $NH_2$ ; 0,25 $GeCl_4$ 0,75 $SiO_2$ ; 25 $H_2O$ | 0,25 TPA-Br ; 0,5 HF ; $4CH_3NH_2$ 0,5 $GeCl_4$ ; 0,5 $SiO_2$ ; 25 $H_2O$ |
| pH (initial-final) | 10,5 - 9 | 11 - 9,5 |
| 0°C/durée | 180°C/15 heures | 180°C/15 heures |
| masse de cristaux obtenus | 1,1 g | 1 g |
| nature du produit obtenu | Germanozéosilite pure | Germanozéosilite pure |
| nombre de Ge/96(Ge+Si) | 17,13 | 32,8 |
| volume de la maille ($nm^3$) | 5,39 | 5,42 |

## Revendications

1. Zéolite caractérisée en ce qu'elle a la formule générale suivante, après calcination :

$$(Si_{96-x}\ Ge_x)\ O_{192}$$

dans laquelle x est compris entre 0,1 et 36.

2. Zéolite selon la revendication 1, caractérisée en ce que la structure de la zéolite est du type structure MFI.

3. Zéolite selon la revendication 1 ou 2, caractérisée en ce qu'elle contient entre 0,01 et 1,4 % en poids de fluor, après calcination.

4. Zéolite selon l'une des revendications 2 à 3, caractérisée en ce qu'elle présente le diagramme de diffraction des rayons X suivant :

| Valeurs extrêmes des $d_{hkl}$ (nm) | $I/I_o$ | Valeurs extrêmes des $d_{hkl}$ (nm) | $I/I_o$ |
|---|---|---|---|
| 1,120 - 1,123 | F-FF | 0,460 - 0,464 | f |
| 0,992 - 1,004 | F-FF | 0,444 - 0,449 | f |
| 0,973 - 0,984 | f | 0,434 - 0,439 | f |
| 0,896 - 0,904 | ff | 0,422 - 0,427 | f |
| 0,803 - 0,811 | ff | 0,406 - 0,411 | ff |
| 0,742 - 0,750 | ff (large) | 0,400 - 0,403 | f |
| 0,705 - 0,712 | ff | 0,3835- 0,3875 | F |
| 0,667 - 0,676 | f | 0,3805- 0,3845 | mF |
| 0,633 - 0,640 | f | 0,3780- 0,3820 | mF |
| 0,595 - 0,602 | mf | 0,3740- 0,3780 | m |
| 0,590 - 0,596 | f | 0,3715- 0,3755 | m |
| 0,570 - 0,576 | mf | 0,3710- 0,3750 | m |
| 0,566 - 0,572 | f (+épaulement) | 0,3650- 0,3690 | f |
| 0,555 - 0,561 | f | 0,3615- 0,3650 | f |
| 0,535 - 0,541 | f | 0,3480- 0,3515 | ff (large) |
| 0,532 - 0,538 | f | 0,3435- 0,3470 | f |
| 0,511 - 0,516 | ff (large) | 0,3415- 0,3450 | f |
| 0,502 - 0,506 | ff | 0,3385- 0,3422 | ff |
| 0,496 - 0,501 | mf | 0,3342- 0,3377 | f (large) |
| 0,486 - 0,491 | ff (large) | 0,3295- 0,3329 | f |
| 0,469 - 0,474 | ff | 0,3245- 0,3279 | f |

5. Procédé de fabrication d'une zéolite selon l'une des revendications précédentes, caractérisé en ce qu'il comprend les étapes suivantes :

(i) Préparation d'un mélange réactionnel en milieu aqueux contenant au moins une source d'oxyde de silicium, une source d'oxyde de germanium, un agent structurant et des ions fluorures, avec des rapports molaires Ge/(Si+Ge) compris entre 0,001 et 0,80, F/(Si+Ge) entre 0,04 et 4, agent structurant/(Si+Ge) entre 0,002 et 4.

(ii) Cristallisation du mélange réactionnel

(iii) Récupération et calcination du précipité cristallin à une température supérieure à 450°C.

6. Procédé selon la revendication 5, caractérisé en ce que, pour un pH supérieur à 12, le rapport molaire Ge/(Ge+Si) est compris entre 0,002 et 0,80, de préférence entre 0,01 et 0,70.

7. Procédé selon la revendication 5 caractérisé en ce que, pour un pH inférieur ou égal à 12, le rapport molaire Ge/(Ge+Si) est compris entre 0,001 et 0,75 de préférence entre 0,002 et 0,60.

8. Procédé selon la revendication 7 caractérisé en ce que le rapport molaire F/(Ge+Si) est compris entre 0,06 et 2.

9. Procédé selon la revendication 5 caractérisé en ce que, pour un pH supérieur à 12, le rapport molaire agent structurant/(Si+Ge) est compris entre 0,06 et 2, et pour un pH inférieur ou égal à 12 entre 0,06 et 1.

10. Procédé selon l'une des revendications 5 caractérisé en ce que le rapport molaire $H_2O$/(Ge+Si) dans le milieu réactionnel est compris entre 4 et 400, de préférence entre 10 et 200 pour un pH supérieur à 12, et entre 20 et 200 pour un pH inférieur ou égal à 12.

11. Procédé selon l'une des revendications 5 à 10, caractérisé en ce que le pH du milieu réactionnel est contrôlé par l'addition d'une base ne contenant pas d'ions alcalin ou ammonium.

12. Procédé selon la revendication 11, caractérisé en ce que la base est choisie dans le groupe comprenant la méthylamine, la diméthylamine, la triméthylamine, l'éthylamine, la diéthylamine et la triéthylamine.

13. Procédé selon la revendication 11 ou 12, caractérisé en ce que le rapport molaire base/(Ge+Si) dans le milieu réactionnel est compris entre 0 et 12, de préférence entre 2 et 8.

14. Procédé selon l'une des revendications 5 à 13, caractérisé en ce que l'oxyde de silicium et l'oxyde de Germanium ont une source commune.

15. Procédé selon l'une des revendications 5 à 14 caractérisé en ce que l'agent structurant précité est choisi dans le groupe comprenant :

- les amines tertiaires de formule I :

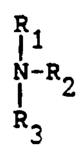

dans laquelle :
$R_1$, $R_2$, $R_3$ identiques ou différents représentent un groupe alkyle, de préférence un groupe propyle ou butyle.

- les ammonium quaternaires de formule II

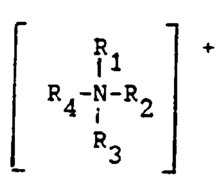

dans laquelle :
$R_1$, $R_2$, $R_3$, $R_4$ identiques ou différents représentent les groupes alkyles, de préférence les groupes propyles ou butyles.

- les composés de formule I ou II dans lesquelles l'azote a été remplacé par un atome de phosphore.

16. Procédé selon l'une des revendications 5 à 13 ou 15, caractérisé en ce que, la source d'oxyde de silicium est choisie dans le groupe comprenant les hydrogels, aérogels ou xérogels, suspensions colloïdales de

silice, les esters siliciques, les silicates solubles dans l'eau, les silices extraites de composés cristallins naturels ou synthétiques, les composés du silicium tétravalent hydrolysables tels que les halogénures de silicium.

17. Procédé selon l'une des revendications 5 à 13, 15 ou 16, caractérisé en ce que la source de germanium est choisie dans le groupe comprenant l'oxyde de germanium du type quartz, les composés du germanium hydrolysables tels que les alkoxydes et halogénures de germanium.

18. Procédé selon la revendication 14, caractérisé en ce que la source commune d'oxyde de germanium et d'oxyde de silice est choisie parmi les verres à base de silice et de germanium et les gels mixtes.

19. Procédé selon l'une des revendications 5 à 18, caractérisé en ce que les ions fluorures sont ajoutés dans le mélange réactionnel sous la forme d'acide fluorhydrique, de fluorhydrates d'amines ou d'ammonium quaternaire, de composés hydrolysables libérant les anions fluorures.

20. Procédé selon la revendication 19, caractérisé en ce que les composés hydrolysables sont des sels fluorés contenant du silicium ou du germanium choisis dans le groupe comprenant les fluorures de germanium, fluorure de silicium.

21. Produit intermédiaire pour la fabrication d'une zéolite selon la revendication 1 contenant de la silice et de l'oxyde de germanium caractérisé en ce qu'il est susceptible d'être obtenu par le procédé comprenant les étapes suivantes :
    (i) Préparation d'un mélange réactionnel en milieu aqueux contenant au moins une source d'oxyde de silicium, une source d'oxyde de germanium, un agent structurant et quand le pH est inférieur ou égal à 12 des ions fluorures, avec des rapports molaires Ge/(Si+Ge) compris entre 0,001 et 0,80, F/(Si+Ge) entre 0,04 et 4, agent structurant/(Si+Ge) entre 0,002 et 4.
    (ii) Cristallisation du mélange réactionnel
    (iii) Récupération du précipité cristallin.

## Patentansprüche

1. Zeolith, dadurch gekennzeichnet, daß er nach Calzinierung die folgende allgemeine Formel aufweist:

$$(Si_{96-x}Ge_x)O_{192}$$

in der x zwischen 0.1 und 36 liegt.

2. Zeolith nach Anspruch 1, dadurch gekennzeichnet, daß die Struktur des Zeolithen vom Strukturtyp MFI ist.

3. Zeolith nach Anspruch 1 oder 2, dadurch gekennzeichnet, daß er nach Calzinierung 0.01 bis 1.4 Gewichtsprozente Fluor enthält.

4. Zeolith nach einem der Ansprüche 2 oder 3, dadurch gekennzeichnet, daß er folgendes Röntgenbeugungsdiagramm aufweist:

| Extremwerte der $d_{hkl}$ (nm) | $I/I_0$ | Extremwerte der $d_{hkl}$ (nm) | $I/I_0$ |
|---|---|---|---|
| 1.120 - 1.123 | F-FF | 0.460 - 0.464 | f |
| 0.992 - 1.004 | F-FF | 0.444 - 0.449 | f |
| 0.973 - 0.984 | f | 0.434 - 0.439 | f |
| 0.896 - 0.904 | ff | 0.422 - 0.427 | f |
| 0.803 - 0.811 | ff | 0.406 - 0.411 | ff |
| 0.742 - 0.750 | ff (breit) | 0.400 - 0.403 | f |
| 0.705 - 0.712 | ff | 0.3835 - 0.3875 | F |
| 0.667 - 0.676 | f | 0.3805 - 0.3845 | mF |
| 0.633 - 0.640 | f | 0.3780 - 0.3820 | mF |
| 0.595 - 0.602 | mf | 0.3740 - 0.3780 | m |
| 0.590 - 0.596 | f | 0.3715 - 0.3755 | m |
| 0.570 - 0.576 | mf | 0.3710 - 0.3750 | m |
| 0.566 - 0.572 | f (+Schulter) | 0.3650 - 0.3690 | f |
| 0.555 - 0.561 | f | 0.3615 - 0.3650 | f |
| 0.535 - 0.541 | f | 0.3480 - 0.3515 | ff (breit) |
| 0.532 - 0.538 | f | 0.3435 - 0.3470 | f |
| 0.511 - 0.516 | ff (breit) | 0.3415 - 0.3450 | f |
| 0.502 - 0.506 | ff | 0.3385 - 0.3422 | ff |
| 0.496 - 0.501 | mf | 0.3342 - 0.3377 | f (breit) |
| 0.486 - 0.491 | ff (breit) | 0.3295 - 0.3329 | f |
| 0.469 - 0.474 | ff | 0.3245 - 0.3279 | f |

F = stark
FF = sehr stark

m = mäßig
mf = mäßig bis schwach
mF = mäßig bis stark

f = schwach
ff = sehr schwach

5. Verfahren zur Herstellung eines Zeolithen nach einem der vorhergehenden Ansprüche, dadurch gekennzeichnet, daß es die folgenden Stufen enthält:
   (i) Herstellung eines Reaktionsgemisches in wässrigem Medium, das mindestens eine Siliziumdioxidquelle, eine Germaniumdioxidquelle, einen Strukturbildner und Fluoridionen enthält, die die molaren Verhältnisse Ge/(Si+Ge), zwischen 0.001 und 0.8, F/(Si+Ge), zwischen 0.04 und 4, und Strukturbildner/(Si+Ge), zwischen 0.002 und 4, aufweisen.
   (ii) Kristallisation des Reaktionsgemisches
   (iii) Gewinnung des kristallinen Niederschlages und dessen Calzinierung bei einer Temperatur oberhalb 450 °C.

6. Verfahren nach Anspruch 5, dadurch gekennzeichnet, daß, für einen pH-Wert größer als 12, das Molverhältnis Ge/(Ge+Si) zwischen 0.002 und 0.8, vorzugsweise zwischen 0.01 und 0.70 liegt.

7. Verfahren nach Anspruch 5, dadurch gekennzeichnet, daß, für einen pH-Wert kleiner oder gleich 12, das Molverhältnis Ge/(Ge+Si) zwischen 0.001 und 0.75, vorzugsweise zwischen 0.002 und 0.60 liegt.

8. Verfahren nach Anspruch 7, dadurch gekennzeichnet, daß das Molverhältnis F/(Ge+Si) zwischen 0.06 und

2 liegt.

**9.** Verfahren nach Anspruch 5, dadurch gekennzeichnet, daß das Molverhältnis Strukturbildner/ (Si+Ge) zwischen 0. 06 und 2 und, für einen pH-Wert kleiner oder gleich 12, zwischen 0.06 und 1 liegt.

**10.** Verfahren nach Anspruch 5, dadurch gekennzeichnet, daß in dem Reaktionsmedium das Molverhältnis $H_2O$/(Ge+Si) zwischen 4 und 400, für einen pH-Wert größer als 12 vorzugsweise zwischen 10 und 200, liegt, und daß es, für einen pH-Wert kleiner oder gleich 12, zwischen 20 und 200 liegt.

**11.** Verfahren nach einem der Ansprüche 5 bis 10, dadurch gekennzeichnet, daß der pH-Wert des Reaktionsmediums durch Zugabe einer Base kontrolliert wird, die keine Alkali- oder Ammoniumionen enthält.

**12.** Verfahren nach Anspruch 11, dadurch gekennzeichnet, daß die Base aus der Gruppe der Verbindungen Methylamin, Dimethylamin, Trimethylamin, Ethylamin, Diethylamin und Triethylamin ausgewählt wird.

**13.** Verfahren nach den Ansprüchen 11 oder 12, dadurch gekennzeichnet, daß in dem Reaktionsmedium das Molverhältnis Base/(Ge+Si) zwischen 0 und 12, vorzugsweise zwischen 2 und 8 liegt.

**14.** Verfahren nach einem der Ansprüche 5 bis 13, dadurch gekennzeichnet, daß das Siliziumdioxid und das Germaniumdioxid aus der gleichen Substanzquelle stammen.

**15.** Verfahren nach einem der Ansprüche 5 bis 14, dadurch gekennzeichnet, daß der vorgenannte Strukturbildner aus folgender Gruppe von Verbindungen ausgewählt wird:

- Tertiäre Amine der Formel I:

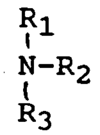

in der:
identische oder verschiedene Reste $R_1$, $R_2$, $R_3$ eine Alkylgruppe, vorzugsweise eine Propyl- oder Butylgruppe, bedeuten.

- Quaternäre Amine der Formel II

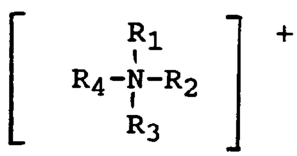

in der:
identische oder verschiedene Reste $R_1$, $R_2$, $R_3$, $R_4$ eine Alkylgruppe, vorzugsweise eine Propyl- oder Butylgruppe, bedeuten.

- Verbindungen der Formeln I oder II, in denen das Stickstoffatom durch ein Phosphoratom ersetzt wurde.

**16.** Verfahren nach einem der Ansprüche 5 bis 13 oder 15, dadurch gekennzeichnet, daß die Siliziumdioxidquelle aus der Gruppe ausgewählt wird, die Hydrogele, Aerogele oder Xerogele, kolloidale Siliziumdioxidsuspensionen, Kieselsäureester, in Wasser lösliche Silikate, aus natürlichen oder synthetisierten kristallinen Verbindungen gewonnene Siliziumdioxide und vierwertige hydrolysierbare Siliziumverbindungen, wie die Siliziumhalogenide, enthält.

**17.** Verfahren nach einem der Ansprüche 5 bis 13, 15 oder 16, dadurch gekennzeichnet, daß die Germaniumquelle aus der Gruppe von Verbindungen ausgewählt wird, die das Germaniumdioxid vom Quartztyp und hydrolysierbare Germaniumverbindungen, wie zum Beispiel Alkoxide und Halogenide des Germaniums, enthält.

**18.** Verfahren nach Anspruch 14, dadurch gekennzeichnet, daß die gemeinsame Quelle des Germaniumdioxids und des Siliziumdioxids unter den Gläsern auf Silizium- und Germaniumbasis und gemischten Gelen ausgewählt wird.

**19.** Verfahren nach einem der Ansprüche 5 bis 18, dadurch gekennzeichnet, daß die Fluoridionen in Form von Fluorwasserstoffsäure, Hydrogenfluoriden von Aminen oder quarternären Ammoniumverbindungen, hydrolysierbare Fluoridanionen freisetzenden Verbindungen, in das Reaktionsgemisch gegeben werden.

**20.** Verfahren nach Anspruch 19, dadurch gekennzeichnet, daß die hydrolysierbaren Verbindungen Fluorsalze sind, die Silizium oder Germanium enthalten und aus der Gruppe der Germaniumfluoride und Siliziumfluoride ausgewählt werden.

**21.** Zwischenprodukt zur Herstellung eines Zeolithen nach Anspruch 1, das Silizium- und Germaniumdioxid enthält, dadurch gekennzeichnet, daß es durch das folgende Stufen enthaltende Verfahren gewonnen werden kann:

(i) Herstellung einer Reaktionsmischung in wässrigem Medium, das mindestens eine Siliziumdioxidquelle, eine Germaniumdioxidquelle, einen Strukturbildner und, wenn der pH-Wert kleiner oder gleich 12 ist, Fluoridionen enthält, die die molaren Verhältnisse Ge/(Si+Ge), zwischen 0.001 und 0.80, F/(Si+Ge), zwischen 0.04 und 4, und Strukturbildner/(Si+Ge), zwischen 0.002 und 4, aufweisen.
(ii) Kristallisation des Reaktionsgemisches
(iii) Gewinnung des kristallinen Niederschlages

## Claims

**1.** Zeolite, characterized in that it has the following general formula, after calcination:

$$(Si_{96-x}Ge_x)O_{192}$$

in which x is between 0.1 and 36.

**2.** Zeolite according to Claim 1, characterized in that the structure of the zeolite is of the MFI type structure.

**3.** Zeolite according to Claim 1 or 2, characterized in that it contains between 0.01 and 1.4% by weight of fluorine, after calcination.

**4.** Zeolite according to one of Claims 2 to 3, characterized in that it has the following X-ray diffraction diagram:

| Extreme values of the $d_{hkl}$ (nm) | $I/I_o$ | Extreme values of the $d_{hkl}$ (nm) | $I/I_o$ |
|---|---|---|---|
| 1.120 - 1.123 | S-SS | 0.460 - 0.464 | w |
| 0.992 - 1.004 | S-SS | 0.444 - 0.449 | w |
| 0.973 - 0.984 | w | 0.434 - 0.439 | w |
| 0.896 - 0.904 | ww | 0.422 - 0.427 | w |
| 0.803 - 0.811 | ww | 0.406 - 0.411 | ww |
| 0.742 - 0.750 | ww (wide) | 0.400 - 0.403 | w |
| 0.705 - 0.712 | ww | 0.3835- 0.3875 | S |
| 0.667 - 0.676 | w | 0.3805- 0.3845 | mS |
| 0.633 - 0.640 | w | 0.3780- 0.3820 | mS |
| 0.595 - 0.602 | mw | 0.3740- 0.3780 | m |
| 0.590 - 0.596 | w | 0.3715- 0.3755 | m |
| 0.570 - 0.576 | mw | 0.3710- 0.3750 | m |
| 0.566 - 0.572 | w (+shoulder) | 0.3650- 0.3690 | w |

| | | | |
|---|---|---|---|
| 0.555 - 0.561 | w | 0.3615- 0.3650 | w |
| 0.535 - 0.541 | w | 0.3480- 0.3515 | ww (wide) |
| 0.532 - 0.538 | w | 0.3435- 0.3470 | w |
| 0.511 - 0.516 | ww (wide) | 0.3415- 0.3450 | w |
| 0.502 - 0.506 | ww | 0.3385- 0.3422 | ww |
| 0.496 - 0.501 | mw | 0.3342- 0.3377 | w (wide) |
| 0.486 - 0.491 | ww (wide) | 0.3295- 0.3329 | w |
| 0.469 - 0.474 | ww | 0.3245- 0.3279 | w |

**5.** Process for the production of a zeolite according to one of the preceding claims, characterized in that it comprises the following steps:
(i) preparation of a reaction mixture in an aqueous medium containing at least a source of silica, a source of germanium oxide, a structuring agent and fluoride ions, with molar ratios of Ge/(Si+Ge) of between 0.001 and 0.80, of F/(Si+Ge) between 0.04 and 4 and of structuring agent/(Si+Ge) between 0.002 and 4,
(ii) crystallization of the reaction mixture and
(iii) recovery and calcination of the crystalline precipitate at a temperature greater than 450°C.

**6.** Process according to Claim 5, characterized in that, for a pH greater than 12, the Ge/(Ge+Si) molar ratio is between 0.002 and 0.80 and preferably between 0.01 and 0.70.

**7.** Process according to Claim 5, characterized in that, for a pH less than or equal to 12, the Ge/(Ge+Si) molar ratio is between 0.001 and 0.75 and preferably between 0.002 and 0. 6 0.

**8.** Process according to Claim 7, characterized in that the F/(Ge+Si) molar ratio is between 0.06 and 2.

**9.** Process according to Claim 5, characterized in that, for a pH greater than 12, the structuring agent/(Si+Ge) molar ratio is between 0.06 and 2, and for a pH less than or equal to 12 between 0.06 and 1.

**10.** Process according to Claim 5, characterized in that the $H_2O$/(Ge+Si) molar ratio in the reaction medium is between 4 and 400, preferably between 10 and 200 for a pH greater than 12 and between 20 and 200 for a pH less than or equal to 12.

**11.** Process according to one of Claims 5 to 10, characterized in that the pH of the reaction medium is controlled by the addition of a base which does not contain alkali metal or ammonium ions.

**12.** Process according to Claim 11, characterized in that the base is chosen from the group comprising methylamine, dimethylamine, trimethylamine, ethylamine, diethylamine and triethylamine.

**13.** Process according to Claim 11 or 12, characterized in that the base/(Ge+Si) molar ratio in the reaction medium is between 0 and 12 and preferably between 2 and 8.

**14.** Process according to one of Claims 5 to 13, characterized in that the silica and the germanium oxide have a common source.

**15.** Process according to one of Claims 5 to 14, characterized in that the structuring agent cited above is chosen from the group comprising:
- tertiary amines of formula I:

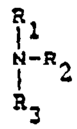

in which:
$R_1$, $R_2$ and $R_3$ are identical or different and represent an alkyl group, preferably a propyl or butyl group,

- quaternary ammonium compounds of formula II

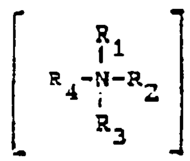

in which:
$R_1$, $R_2$, $R_3$ and $R_4$ are identical or different and represent alkyl groups, preferably propyl or butyl groups,

- compounds of formula I or II in which the nitrogen has been replaced by a phosphorus atom.

**16.** Process according to one of Claims 5 to 13 or 15, characterized in that the source of silica is chosen from the group comprising hydrogels, aerogels or xerogels, colloidal suspensions of silica, silicic acid esters, silicates soluble in water, silicas extracted from naturally occurring or synthetic crystalline compounds, and hydrolysable tetravalent silicon compounds, such as silicon halides.

**17.** Process according to one of Claims 5 to 13, 15 or 16, characterized in that the source of germanium is chosen from the group comprising germanium oxide of the quartz type and hydrolysable germanium compounds such as germanium alkoxides and halides.

**18.** Process according to Claim 14, characterized in that the common source of germanium oxide and silica is chosen from glasses based on silica and germanium and mixed gels.

**19.** Process according to one of Claims 5 to 18, characterized in that the fluoride ions are added to the reaction mixture in the form of hydrofluoric acid, amine or quaternary ammonium hydrofluorides and hydrolysable compounds liberating fluoride anions.

**20.** Process according to Claim 19, characterized in that the hydrolysable compounds are fluorine-containing salts containing silicon or germanium chosen from the group comprising germanium fluorides and silicon fluoride.

**21.** Intermediate product for the manufacture of a zeolite according to Claim 1 containing silica and germanium oxide, characterized in that it can be obtained by the process comprising the following steps:
(i) preparation of a reaction mixture in an aqueous medium containing at least a source of silica, a source of germanium oxide, a structuring agent and, when the pH is less than or equal to 12, fluoride ions, with molar ratios of Ge/(Si+Ge) between 0.001 and 0.80, of F/(Si+Ge) between 0.04 and 4 and of structuring agent/ (Si+Ge) between 0.002 and 4,
(ii) crystallization of the reaction mixture and
(iii) recovery of the crystalline precipitate.